# EUROPEAN PATENT APPLICATION

(11) **EP 1 413 941 A1**
(43) Date of publication of application: **28.04.2004**
(21) Application number: 02023777.2
(22) Date of filing: 25.10.2002
(51) Int. Cl.: G06F 1/00, G06F 3/033

(54) **Fingerprint access control mouse**

(71) Applicant: Chen, Hung Hua, Hsin-Tien, Taipei (TW)
(72) Inventor: Chen, Hung Hua, Hsin-Tien, Taipei (TW)
(74) Representative: LOUIS- PÖHLAU- LOHRENTZ

(57) **Abstract**

A fingerprint access control mouse used in a PC (personal computer system) for data input into the PC and controlling positioning of a pointer on the display screen of the PC, and controlled by a file management system resided in the PC to control the access of the user to the files stored in the PC and the use of files classified subject to the ranking of the user set in the file management system, the fingerprint access control mouse having a lens in the outside wall and an image pickup device adapted to pick up the image of the fingerprint of the finger of the user rested on the lens.

## Description

### BACKGROUND OF THE INVENTION

### 1. Field of the invention:

The present invention relates to a fingerprint access control device and, more particularly, to a fingerprint access control mouse to be used in a personal computer system and controlled by a file management system resided in the personal computer system to control the access of the user to the files stored in the personal computer system and the use of files classified subject to the ranking of the user set in the file management system.

### 2. Description of the Related Art:

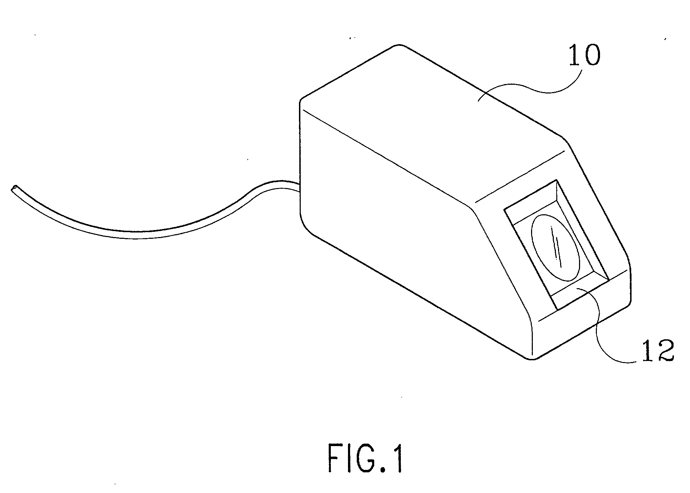

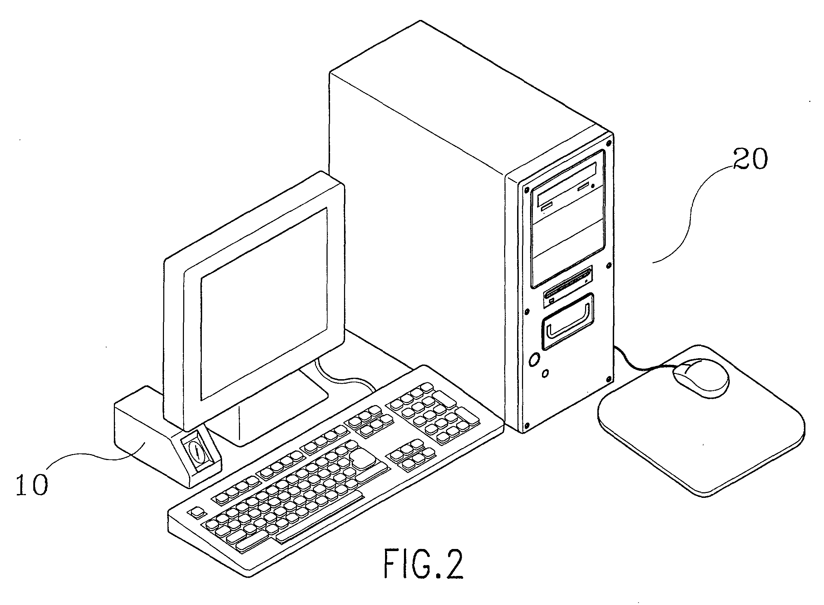

Various fingerprint access control systems have been developed for use in a computer system to control access to the operating system of the computer system. By means of fingerprint access control, the computer system can control the user to use classified files subject to the ranking of the user. FIG. 1 illustrates a prior art fingerprint access control device for this purpose. FIG. 2 shows the prior art fingerprint access control device used in a personal computer system. According to this design, the fingerprint access control device **10** has a fingerprint pickup window **12**. When the user pressed the finger on the fingerprint pickup window **12**, the internal image pickup device of the fingerprint access control device **10** picks up the image of the fingerprint, and then transmits the image of the fingerprint to the computer system **20** through a RS-232 interface or USB connector for recognition. When the inputted fingerprint matched, the computer system **20** gives a permission to the user to use the computer system **20**. Because the fingerprint access control device **10** is an independent device, it requires an additional tabletop space. The user must press the finger on the fingerprint pickup window **12.**of the fingerprint access control device **10** before using the mouse or keyboard of the computer system **20**, and then remove the hand to the mouse or the keyboard to operate the computer system **20** when allowed to use the computer system **20**. Furthermore, the fingerprint access control device **10** is simply used to determine permission to the user to use the personal computer **20**. When the user allowed to use the personal computer **20**, the fingerprint access control device **10** cannot control the user to use, edit, and delete the files in the personal computer **20**.

### SUMMARY OF THE INVENTION

The present invention has been accomplished to provide a fingerprint access control mouse, which eliminates the aforesaid drawbacks. It is the main object of the present invention to provide a fingerprint access control mouse, which controls permission to use the personal computer system. It is another object of the present invention to provide a fingerprint access control mouse, which to control the access of the user to the files stored in the computer system and the use of the files classified subject to the ranking of the user.

The fingerprint access control mouse is to be used in a personal computer system for data input into the personal computer system and controlling positioning of a pointer on the display screen of the personal computer system, and controlled by a file management system resided in the personal computer system to control the access of the user to the files stored in the personal computer system and the use of files stored in the personal computer system subject to the ranking of the user set in the file management system. The fingerprint access control mouse comprises a lens in the outside wall, and an image pickup device adapted to pick up the image of the fingerprint of the finger of the user rested on the lens. The image pickup device can be a CCD (charge-coupled device) camera or optical scanner.

### BRIEF DESCRIPTION OF THE DRAWINGS

FIG. 1 is an elevational view of a fingerprint access control device constructed according to the prior art.
FIG. 2 is an applied view of the prior art, showing the fingerprint access control device installed in a personal computer system.
FIG. 3 is an elevational view of a fingerprint access control mouse according to one embodiment of the present invention.
FIG. 4 is similar to FIG. 3 but showing the image pickup device provided behind the lens in one sidewall of the fingerprint access control mouse.
FIG. 5 is an applied view of the present invention, showing the fingerprint access control mouse used in a personal computer system.
FIG. 6 is an elevational view of an alternate form of the fingerprint access control mouse according to the present invention.
FIG. 7 is an elevational view of another alternate form of the fingerprint access control mouse according to the present invention.
FIG. 8A is a top rank fingerprint file setting block diagram according to the present invention.
FIG. 8B is a user fingerprint file setting block diagram according to the present invention.
FIG. 9 is a diagram explaining the control flow of the file management system according to the present invention.

### DETAILED DESCRIPTION OF THE PREFERRED EMBODIMENT

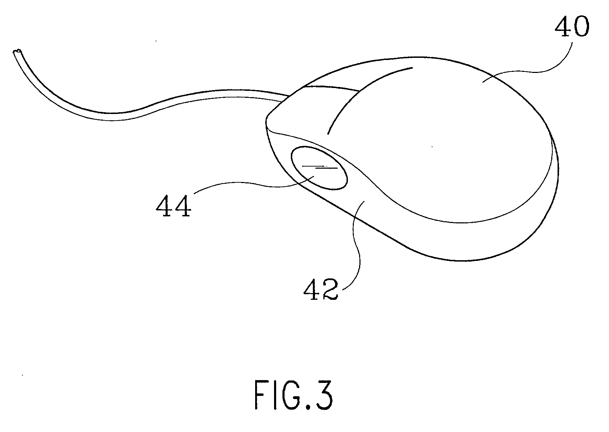

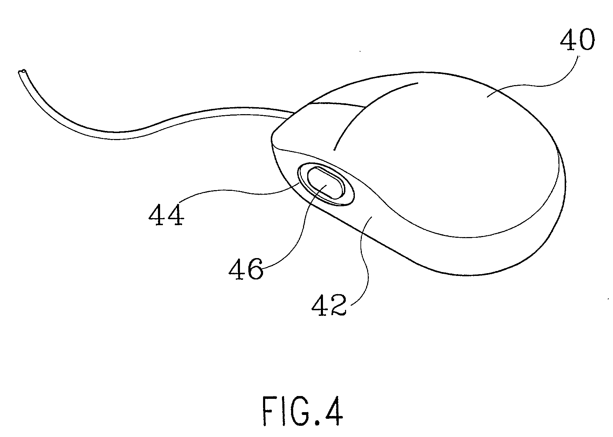

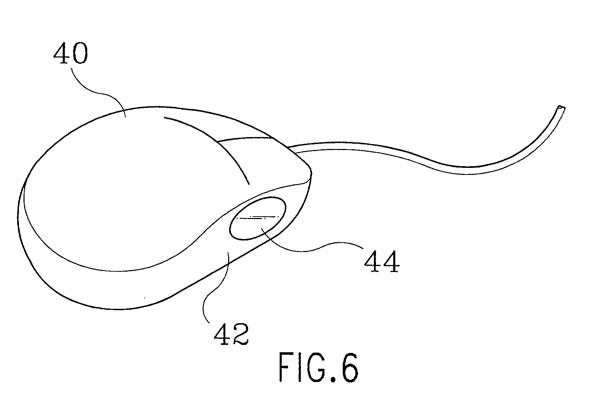

Referring to FIGS. 3, 4, and 6, a fingerprint access control mouse **40** is basically an optical computer mouse, having a lens **44** in one sidewall **42,** and an image pickup device **46** behind the lens **44**. The image pickup device **46** can be a CCD (charge-coupled device) camera or scanner), When the user holds the fingerprint access control mouse **40** with the thumb rested on the lens **44**, the image pickup device **46** immediately picks up the image of the fingerprint of the thumb for verification. According to the embodiment shown in FIGS, 3 and 4, the lens **44** is located on the left side of the mouse **40** to fit a right-hand user. According to the embodiment shown in FIG. 6, the lens **44** is located on the right side of the mouse **40** to fit a left-hand user.

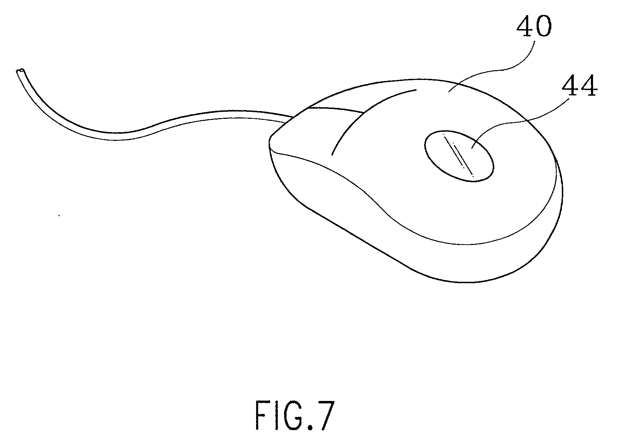

Referring to FIG. 7, as another alternate form of the fingerprint access control mouse **40**, the lens **44** may be located on the top center of the housing of the fingerprint access control mouse **40**.

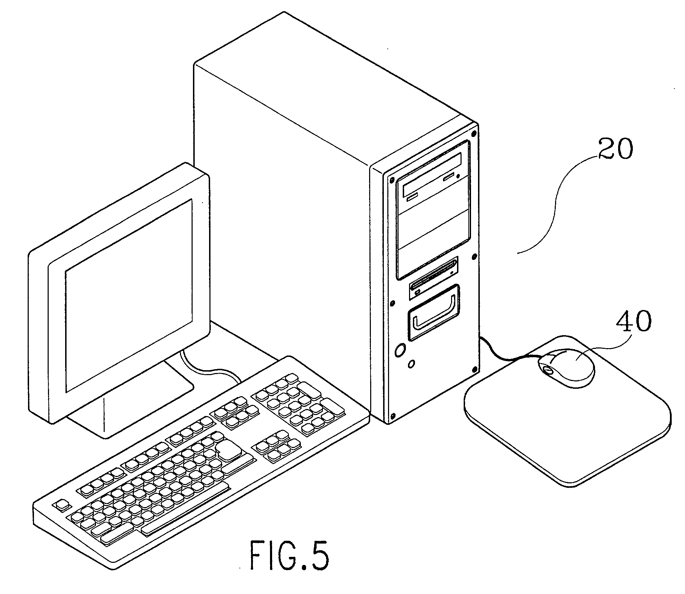

Referring to FIG. 5, the fingerprint access control mouse **40** is connected to a personal computer system **20** for access control. When the user operates the fingerprint access control mouse **40**, the mouse drive program having video transmission function, the fingerprint access control program, or the file management system installed in the personal computer system **20** immediately compares the user's fingerprint with the stored fingerprint data, and determines if to give the user permission to use the personal computer system **20**, or permission to get to controlled files, etc. The file management system divides users into three ranks, i.e., the top rank (the owner), the middle rank, and the low rank. The files or data stored in the personal computer system **20** are classified into three groups, i.e., the top rank group, the middle rank group, and the low rank group. The file management system resides in the operating system of the personal computer system **20**. Any user cannot modify or delete the file management system.

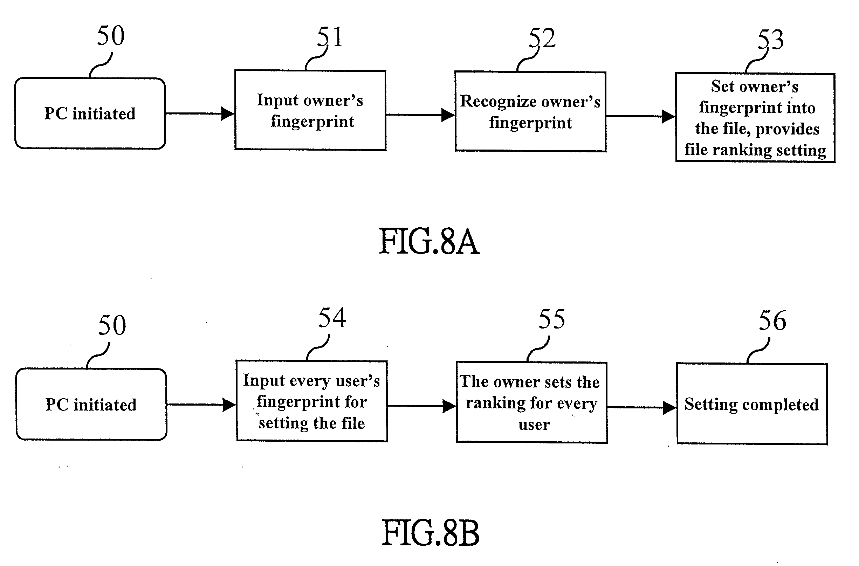

FIG. 8A is a top rank fingerprint file setting block diagram according to the present invention. At the first use of the file management system, the top rank (the owner) fingerprint file and the computer file and data ranking must be set up. When the personal computer system initiated **50**, input the fingerprint of the personal computer system owner **51**, and then input the fingerprint of the personal computer system owner again and verify the authenticity of the fingerprint **52**, and then the file management system automatically sets up the fingerprint file and provides file ranking setting **53**, completing initial setting.

FIG. 8B is a user fingerprint file setting block diagram according to the present invention. After the aforesaid top rank (the owner) fingerprint file and computer file and data ranking has been set up, the user fingerprint file is set up subject to the following steps. When the personal computer system initiated **50**, input the fingerprint of every user allowed to use the personal computer system **54**, and then the person computer system owner sets the ranking for every user **55**, and thus the setting is completed **56**.

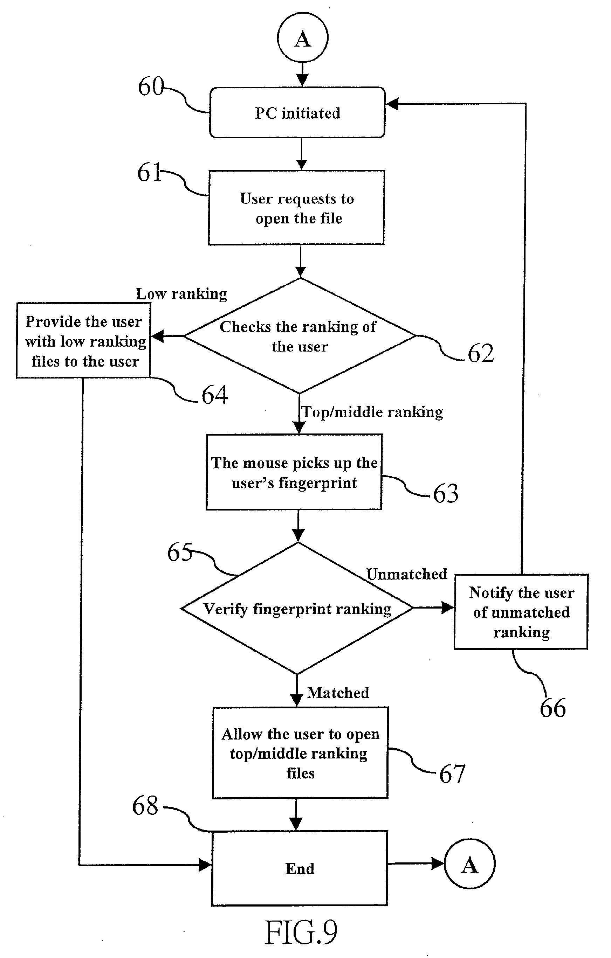

FIG. 9 is a diagram explaining the control flow of the file management system according to the present invention. The control flow of the file management system includes the steps of:
60 PC initiated;
61 The user requests to open the file;
62 The file management system checks the ranking of the user, and then it proceeds to step **63** if the user is a top/middle ranking user;
63 The fingerprint access control mouse picks up the user's fingerprint, and then it proceeds to step **64** if the user is a low ranking user;
64 The file management system provides the user with low ranking files;
65 Verify fingerprint ranking;
66 Notify the user of unmatched ranking;
67 Allow the user to open top/middle ranking files subject to the user's ranking;
68 End the use of the file management system, and return to the initial status.

The aforesaid file management system allows the top ranking user (the owner) and every middle-ranking user to set up a new file, to browse web sites, and to receive/send e-mails. When a hacker or virus intruding into top/middle ranking files, or when the inputted fingerprint unmatched, the file management system refuses the access and blocks the intrusion.

A prototype of fingerprint access control mouse has been constructed with the features of FIGS. 3∼9. The fingerprint access control mouse functions smoothly to provide all of the features discussed earlier.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A fingerprint access control mouse used in a personal computer system for data input into said personal computer system and controlling positioning of a pointer on a display screen of said personal computer system, and controlled by a file management system resided in said personal computer system to control the access of the user to the files stored in said personal computer and the use of the files classified subject to the ranking of the user set in said file management system, the fingerprint access control mouse comprising a lens in an outside wall thereof and an image pickup device adapted to pick up the image of the fingerprint of the finger of the user rested on said lens.

2. The fingerprint access control mouse, wherein said lens is located on one lateral side of the fingerprint access control mouse.

3. The fingerprint access control mouse, wherein said lens is located on the center of a top side of the fingerprint access control mouse.
